# EUROPEAN PATENT SPECIFICATION

(11) **EP 3 584 112 B1**
(45) Date of publication and mention of the grant of the patent: **13.10.2021**
(21) Application number: 18178587.4
(22) Date of filing: 19.06.2018
(51) Int. Cl.: B60N 2/75, E02F 9/20, B66F 9/075, B66F 9/20

(54) **ARMREST**
ARMLEHNE
ACCOUDOIR

(43) Date of publication of application: 25.12.2019
(73) Proprietor: Sandvik Mining and Construction Oy, 33311 Tampere (FI)
(72) Inventor: Sainio, Tomi, 20100 Turku (FI)
(74) Representative: Sandvik

(56) References cited:
- EP-A1- 0 018 662
- EP-A2- 2 369 066
- EP-A2- 2 832 583
- US-A- 6 164 285

## Description

### BACKGROUND

The invention relates to an armrest, comprising an user interface.

It is known solution in modern utility vehicles to arrange an user interface, such as a joystick, in an armrest of user's or driver's seat. This solution may provide an ergonomically advantageous position.

Typically the armrest has to have a tilting structure in order to allow easier access on the seat or away from the seat. However, some utility vehicles have very small cabin, and for instance a back wall of the cabin may lie immediately back of the seat. A problem is that a joystick or some other user interface projecting from the armrest make easily contact with the back wall and limits the rotating angle of the armrest. This feature limits accessibility of the seat. Some known prior art armrests are disclosed in patent publications EP 0018662 A1, EP 2369066 A2, EP 2832583 A2 and US 6164285 A.

### BRIEF DESCRIPTION

Viewed from a first aspect, there can be provided an armrest, comprising a user interface, the armrest comprising an upper beam, a lower beam, said upper and lower beams being arranged one on the other and attached at their first end rotatable with respect to an operator's operating environment by upper and lower pivot points, respectively, the upper and lower pivot points having a first distance, the upper and lower beams being attached at their second end rotatable to a user interface support by upper and lower support pivot points, respectively, the upper and lower support pivot points having a second distance, the beams and the pivot points being arranged so that due to rotation of the beams from an operating position of the armrest to an upper position of said armrest, the user interface support rotates less than the beams, wherein the operating position of the armrest is at least essentially a horizontal position, the upper position is at least essentially a vertical position, and at least an upper side of the upper beam comprises an armrest padding.

Thereby an armrest the rotational movement of which is large and which allows an easy accessibility of the seat may be achieved. This arrangement is an optimal one for at least most of operator's operating environments, such as seats and with padding comfort of the armrest may be improved.

Preferably, the length of the upper beam is the same as the length of the lower beam, and the first distance is the same as the second distance, the beams and the pivot points thus making a parallelogram system, and said rotational movement of the user interface support is zero degree (0°). An advantage is that the user interface does not change its position during the tilting of the armrest.

Preferably, one of the upper and lower beams is shorter than the other beam. An advantage is that it is possible to adapt the position of the user interface in the upper position of the armrest optimally in dimensions and design of the cabin.

Preferably, one of the first and second distances is shorter than the other distance. An advantage is that it is possible to adapt the position of the user interface in the upper position of the armrest optimally in dimensions and design of the cabin.

Preferably, rotating axles of the pivot points are horizontally arranged. An advantage is that the movement of the armrest takes place in a vertical plane, and thus there are no lateral movements that could be problematic in a small cabin.

Preferably, the lower pivot point is arranged closer to the user interface support as the upper pivot point. An advantage is that it is possible to rotate the beams in upright position.

Preferably, the armrest comprises a locking means that is arranged to lock the armrest in at least one of the operating position and the upper position. An advantage is that the locked position does not change unintentionally.

Preferably, the locking means of the armrest comprises a glide element arranged to glide in the upper or the lower beam, a locking stay, one end of which being connected rotatable to the glide element, and another end of the stay being arranged in the lower or the upper beam, respectively, the stay thus connecting the upper beam to the lower beam, and a locking mechanism that is arranged to prevent the glide element to glide when being in its locking state. An advantage is a simple and reliable realization of the locking means.

Preferably, the armrest comprises a height adjustment means that is arranged to change the height of the upper beam with respect to the operator's operating environment. An advantage is that ergonomic of the operating environment may be optimized.

Preferably, the height adjustment means is arranged to tilt the upper beam, the tilting axle being in the upper pivot point. An advantage is a simple and reliable structure.

Preferably, the height adjustment means comprises a screw lengthwise and rotatable arranged in the upper or the lower beam, a height adjustment stay comprising a first and a second end, the first end being connected rotatable to an adjustment element and comprising a threaded aperture, the screw being fitted through said aperture such that rotation of the screw moves the adjustment element in the upper or the lower beam, and the second end of the height adjustment stay being attached rotatable to the lower or the upper beam, respectively, thus the rotational movement of the screw being arranged to bring the beams closer to each other or, in opposite rotational direction, increasing distance of the beams. An advantage is that the height of the armrest may be controlled a precisely way.

Preferably, the user interface is connected to the user interface support by position adjustment means allowing movement between the user interface and the user interface support. An advantage is that ergonomic of the user interface may be optimized.

### BRIEF DESCRIPTION OF FIGURES

An embodiment illustrating the present disclosure is described in more detail in the attached drawings, in which
Figure 1 is a schematic side view of an armrest arranged in a seat and being in its operating position,
Figure 2 is a schematic side view of the armrest shown in

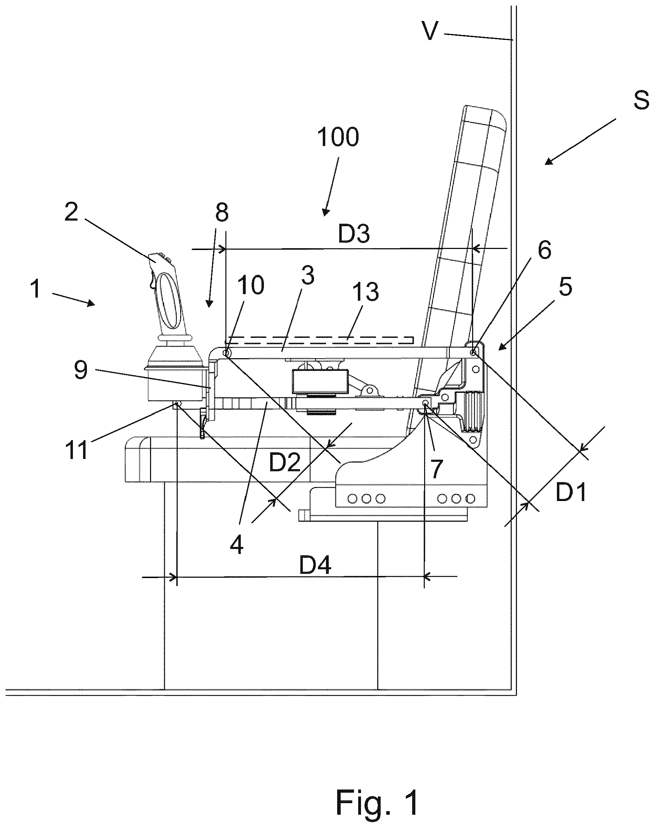

Figure 1 in an interstitial position,

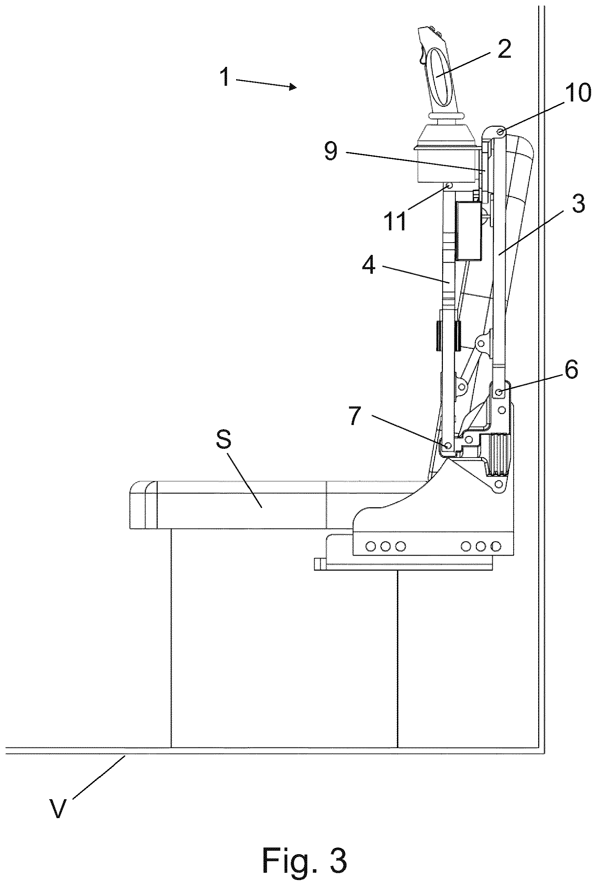

Figure 3 is a schematic side view of the armrest shown in
Figure 1 in an upper position,

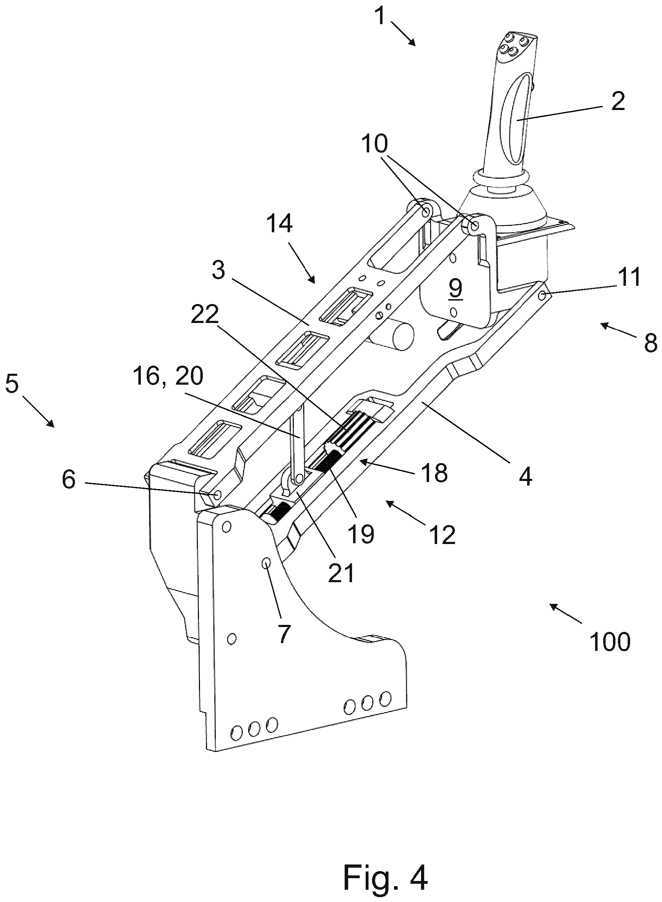

Figure 4 is a schematic perspective view of the armrest shown in Figure 1,

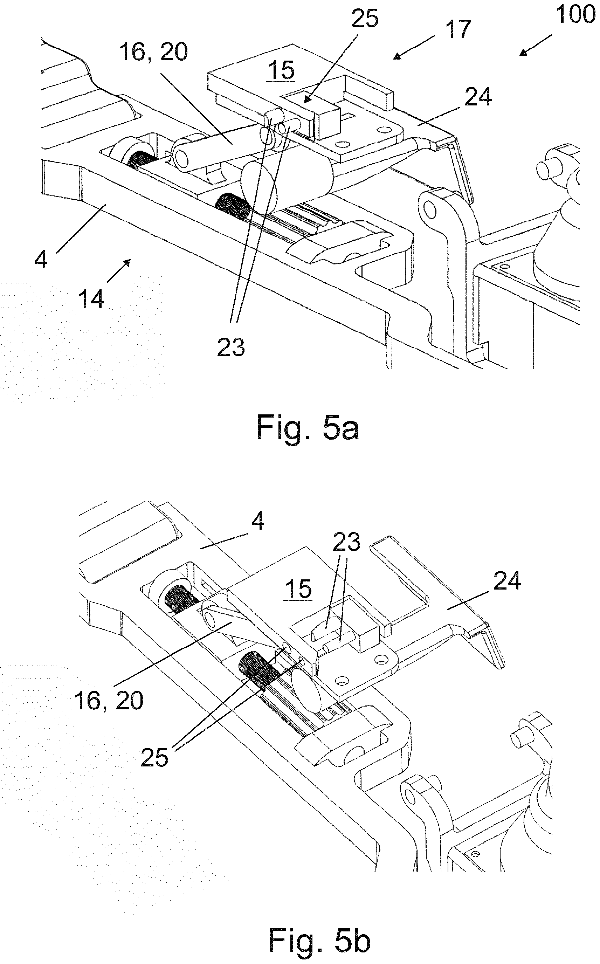

Figures 5a and 5b are schematic perspective views of a detail of the armrest shown in Figure 1, and

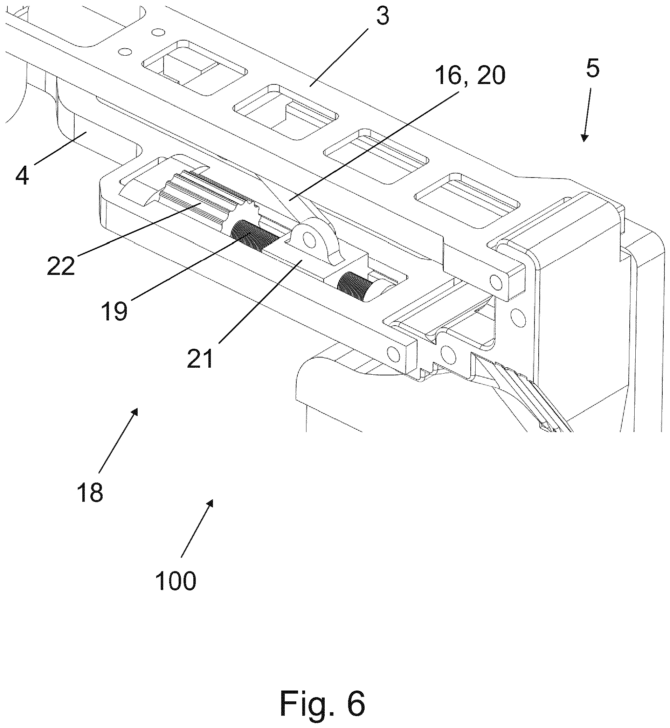

Figure 6 is a schematic perspective view of another detail of the armrest shown in Figure 1.

In the figures, the embodiment is shown simplified for the sake of clarity. Similar parts are marked with the same reference numbers in the figures.

### DETAILED DESCRIPTION

Figure 1 is a schematic side view of an armrest arranged in a seat and being in its operating position,

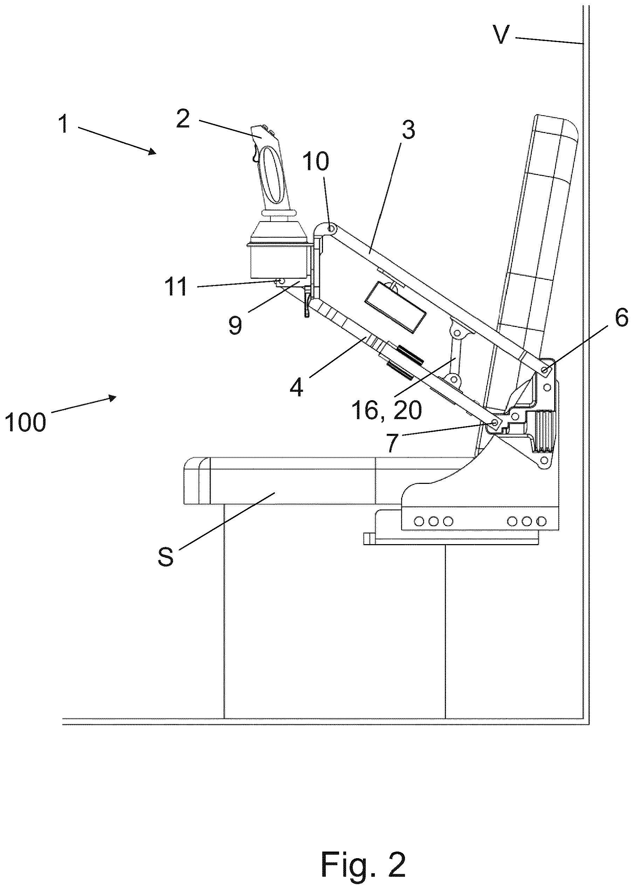

Figure 2 is a schematic side view of the armrest shown in Figure 1 in an interstitial position, Figure 3 is a schematic side view of the armrest shown in Figure 1 in an upper position, and Figure 4 is a schematic perspective view of the armrest shown in Figure 1.

The seat S of a vehicle V creates here an operator's operation environment, and the armrest 100 is attached to the seat S. An advantage of the combined structure of the seat S and the armrest 100 is that it may be designed fairly independently from other structures of vehicle.

The operator may be e.g. driver of the vehicle, or a person taking care of some other functions than driving the vehicle, etc.

The vehicle may be any type of a utility vehicle, such as a tractor, a truck, a farming machine, a forestry machine etc.. According to an idea, the vehicle V is a mining vehicle or a construction vehicle. In mines and at other work sites different type of vehicles are used. The vehicles may be provided with one or more working devices for executing designed work tasks at the work site. The vehicle may be a wheel loader, a transport vehicle or dumper, a rock drilling rig, an excavator or a lifting machine, for example.

It is to be noted that instead of a seat, the armrest 100 may be arranged in some another type of operation environment, such as a driving or controlling environment or cabin of a vehicle, where the driver or operator person is not sitting but in a standing position. Preferably, the armrest 100 may be attached to a door or a wall of a cabin.

The armrest 100 includes a user interface 1 that comprises a joystick 2. The joystick 2 is operable in plurality of directions away from its central position. Furthermore, the joystick 2 may comprise one or more buttons or controllers.

It is to be noted, that in addition to the joystick 2, the user interface 1 may comprise further controllers, displays etc.

Preferably, the user interface 1 comprises a lever that is operable linearly in two directions. The mechanical structure of the armrest 100 comprises an upper beam 3 and a lower beam 4. The material of the beams may be e.g. metal, polymer or composite material. At least an upper side of the upper beam comprises an armrest padding 13.

The upper and lower beams 3, 4 are arranged one on the other and attached at their first end 5 rotatable to the seat S by upper 6 and lower 7 pivot points, respectively. The upper and lower pivot points 6, 7 are arranged in a first distance D1 from each other. Rotating axis of the pivot points 6, 7 are horizontally arranged.

It is to be noted, however, preferably, the rotating axis of the pivot points 6, 7 are arranged in a plane that deviates from a horizontal plane. Due to this feature, the movement of the armrest 100 from the operating position into the upper position may cause the armrest 100 also move laterally, e.g. away from the seat S. An advantage is that inconvenience caused by the armrest in its upper position may be limited. Preferably, the position of the pivot points 6, 7 causes the armrest 100 to move closer to e.g. the seat S. An advantage is that the armrest may reach its upper position even if the cabin's door or side wall is sloping inwards. The upper and lower beams 3, 4 are attached at their second end 8 rotatable to a user interface support 9 by upper 10 and lower 11 support pivot points, respectively. The upper and lower support pivot points 10, 11 have a second distance D2.

Preferably, as shown in the Figures, the upper beam 3 is connected to the user interface support 9 in two points, whereas the lower beam 4 is connected by one point only. This three-point attachment is sturdy and the one-point attachment of the lower beam 4 allows the user interface support 9 and/or the user interface 1 to extend laterally beyond contours of the lower beam without limiting rotational movement of the armrest 100.

Preferably, the pivot points 6, 7, 10, 11 have a simple structure, comprising an axle and an aperture therefor. Preferably, said pivot points 6, 7, 10, 11 may further comprise a bearing that eases rotation of the beams.

Preferably, as shown in the Figures 1 - 4, the lower pivot point 7 is arranged closer to the user interface support 9 as the upper pivot point 6. This way it has been created room for the beams 3, 4 for rotating in their upper position shown in Figure 3.

As shown in the Figures 1 - 4, the operating position of the armrest 100 (shown in Figure 1) is at least essentially a horizontal position. The term "at least essentially horizontal position" means a range of angles of ±15° to the horizontal plane. Preferably, the armrest 100 is arranged to slope down about 10°, e.g. 8° - 12° from the first end of beams towards the second ends of the beams.

The upper position (shown in Figure 3) is at least essentially a vertical position. The term "at least essentially vertical position" means a range of angles of ±20°, e.g. ± 10° to the vertical plane.

Preferably, as shown in the Figures, the rotational movement of the armrest 100 is about 90°. Preferably, the upper position may be more or less than the upper position shown in Figure 3. Also the rotational movement between the operating position and the upper position may be more or less than 90°. According to an idea, the rotational movement is in range of 70° - 110°.

The beams 3, 4 and the pivot points 6, 7, 10, 11 are arranged so that during rotation of the beams 3, 4 from an operating position of the armrest 100 shown in Figure 1, to an upper position of said armrest shown in Figure 3, the rotational movement of the user interface support 9 is smaller than the rotational movement of the beams 3, 4. In the embodiment shown in Figures, the rotational movement of the user interface support 9 is about 0°, whereas the rotational movement of the beams 3, 4 is about 90°.

Preferably, as shown in the Figures 1 - 4, the length of the upper beam 3 (i.e. distance D3 between the upper pivot point 6 and the upper support pivot point 10) is same as the length of the lower beam 4 (i.e. distance D4 between the lower pivot point 7 and the lower support pivot point 11) . Furthermore, the first distance D1 is same as the second distance D2. Thus the beams 3, 4 and the pivot points 6, 7, 10, 11 constitutes a parallelogram system. The parallelogram system keeps the the user interface support 9 and the user interface 1 attached thereto in a constant position regardless of the rotational movement of the beams 3, 4. In other words, the rotational movement of the user interface support 9 is zero degree (0°), and the joystick 2 is always in a same upright position.

Preferably, the length of the upper beam 3 (i.e. distance D3) differs from the length of the lower beam 4 (i.e. distance D4). The upper beam 3 may be shorter or longer than the lower beam 4. Still preferably, the first distance D1 differs from the second distance D2. By varying said distances D1 - D4 it is possible to alter the rotational movement of the user interface support 9. In other words, said rotational movement may differ from zero degree (0°). According to an idea, the rotational movement of the user interface support 9 is in a range of -20° - 20°, wherein minus degree means the user interface support 9 is rotating in opposite direction compared to the beams 3, 4. This way it is possible to arrange the position of the user interface 1 in the upper position of the armrest 100 to fit optimally in dimensions and design of the cabin. For instance, position of the joystick 2 may be somewhat tilted forwards or backwards from the upright position shown in Figure 3.

Anyway, the rotational movement of the user interface 1 is still smaller than the rotational movement of the beams 3, 4.

The tilting of the armrest 100 may be assisted by an actuator, such as an electric motor or gas spring.

Preferably, the position of the user interface 1 is adjustable by position adjustment means 12 in relation to the user interface support 9. The user interface 1 may be rotated or swung, and/or its distance, lateral position and/or height position may be adjusted so that an ergonomically optimal position can be arranged.

**Figures 5a and 5b** are schematic perspective views of a detail of the armrest shown in Figure 1. According to an idea, the armrest 100 comprises a locking means 14 that is arranged to lock the armrest 100 in the operating position or the upper position, or to both of said positions. Figure 5a is showing a locked state of the locking means 14, and Figure 5b an open or unlocked state.

Preferably, as shown in the Figures 5a, 5b, the locking means 14 comprises a glide element 15 arranged to glide on rails in the upper beam 3. The locking means 14 further comprises a locking stay 16, one end of which being connected rotatable to the glide element 15, and another end being attached rotatable in the lower beam 4. The locking stay 16 thus connects the upper beam 3 to the lower beam 4.

When the armrest 100 is in the operating position, the locking stay 16 is in an inclined position with respect to the beams 3, 4. As the armrest 100 is moved upwards, the distance between the beams 3, 4 begin first to grow and the locking stay 16 moves towards a perpendicular position in respect of the beams 3, 4. As the armrest 100 has reached about half-way of its rotational movement, the distance between the beams 3, 4 has a maximum value. As the rotational movement is continued, the distance begins to decrease.

The locking means 14 further comprises a locking mechanism 17 that is arranged to prevent the glide element 15 to move when being in its locking state.

Preferably, as shown in the Figures 5a, 5b, the locking mechanism 17 comprises two pegs 23 arranged in the glide element 15 movable arranged and extending laterally from the glide element 15. The pegs 23 are connected to a control lever 24 through which the pegs can be moved into and out of receiving apertures 25 arranged in the upper beam 3. The pegs 23 inserted in the receiving apertures 25 lock the glide element 15 to the upper beam 3 and prevent movements of the armrest 100. An actuator (not shown), as a spring, may be arranged to urge the pegs 23 into their locked position.

Preferably, the pegs 23 have basically a round shape, but one of the pegs 23 comprises a flat or wedge-like section that facilitates alignment of the pegs 23 and the receiving apertures 25.

However, it is to be noted that the locking means 14 and the locking mechanism 17 may be realized several ways. The mechanism may be totally mechanical one, or alternatively, it may comprise electrical components such as a solenoid or an electric lock. The mechanism may even be a remote-controlled one.

It is to be noted, that the structure of the locking means 14 may be reverse to that shown in Figures 5a, 5b, i.e. the glide element 15 may be arranged in the lower beam 4.

**Figure 6** is a schematic perspective view of another detail of the armrest shown in Figure 1. According to an idea, the armrest 100 may comprise a height adjustment means 18 that is arranged to change the height of the upper beam 3 with respect to the operator's site, such as the seat S.

Preferably, as shown in Figure 6, the height adjustment means 18 is arranged to tilt the upper beam 3, the tilting axle being in the upper pivot point 6. Thus the upper beam 3 raises or descends the most at its front part, i.e. close to the user interface 1.

The height adjustment is realized by a mechanism that comprises a screw 19 that is lengthwise and rotatable arranged in the lower beam 4, and a height adjustment stay 20, a first end of which is connected rotatable to an adjustment element 21. The adjustment element 21 comprises a threaded aperture, through which the screw 19 is fitted. Thus position of the adjustment element 21 may be changed by rotating the screw 19.

The second end of the height adjustment stay 20 is attached rotatable to the upper beam 3. The rotational movement of the screw 19 brings the beams 3, 4 closer to each other or, in opposite rotational direction of the screw 19, increases distance of the beams 3, 4.

Preferably, as shown in the Figures, the height adjustment stay 20 and the locking stay 16 are a very same element. Preferably, they may be separate elements.

According to an idea, the locking mechanism and the height adjustment mechanism are separated so that the adjusted height of the armrest 100 is not affected or altered by tilting the armrest in its upper position.

It is to be noted, that the structure of the height adjustment means 18 may be reverse to that shown in Figure 6, i.e. the screw 19 may be arranged in the upper beam 3.

A handle 22 may be connected to the screw 19 in order to ease of rotating the screw 19.

Preferably, the height adjustment means 18 is provided with an assistant means, such as electric motor, that eases the height adjustment. For instance, the electric motor may be arranged to rotate the screw 19.

Preferably, the height adjustment means 18 comprises an actuator, such as a gas spring, arranged between the upper and the lower beams 3, 4. Said actuator may even replace the height adjustment stay 20.

Still preferably, the screw 19 is replaced by an actuator, such as a gas spring, that is arranged to move the height adjustment stay 20. The height adjustment means 18 may comprise a locking means that prevents unintentional movements of the armrest 100.

The invention is not limited solely to the embodiment described above, but instead many variations are possible within the scope of the inventive concept as defined by the claims below.

The drawings and the related description are only intended to illustrate the idea of the invention. The invention may vary in detail within the scope of the inventive idea as defined in the following claims.

### REFERENCE SYMBOLS

- 1: user interface
- 2: joystick
- 3: upper beam
- 4: lower beam
- 5: first end of beams
- 6: upper pivot point
- 7: lower pivot point
- 8: second end of beams
- 9: user interface support
- 10: upper support pivot point
- 11: lower support pivot point
- 12: position adjustment means
- 13: armrest padding
- 14: locking means
- 15: glide element
- 16: locking stay
- 17: locking mechanism
- 18: height adjustment means
- 19: screw
- 20: height adjustment stay
- 21: adjustment element
- 22: handle
- 23: peg
- 24: control lever
- 25: receiving aperture

- 100: armrest

- D1: first distance
- D2: second distance
- D3: third distance
- D4: fourth distance
- S: seat
- V: vehicle

## Claims

1. An armrest (100), comprising a user interface (1), the armrest comprising
- an upper beam (3),
- a lower beam (4),
- said upper and lower beams being arranged one on the other and attached at their first end (5) rotatable with respect to an operator's operating environment by upper and lower pivot points (6, 7), respectively, the upper and lower pivot points having a first distance (D1),
- the upper and lower beams being attached at their second end (8) rotatable to a user interface support (9) by upper and lower support pivot points (10, 11), respectively, the upper and lower support pivot points having a second distance (D2),
- the beams (3, 4) and the pivot points (6, 7, 10 ,11) being arranged so that due to rotation of the beams (3, 4) from an operating position of the armrest (100) to an upper position of said armrest, the user interface support (9) rotates less than the beams (3, 4), wherein
- the operating position of the armrest (100) is at least essentially a horizontal position, and
- the upper position is at least essentially a vertical position, **characterized in that**
- at least an upper side of the upper beam (3) comprises an armrest padding (13).

2. The armrest as claimed in claim 1, wherein
- the length of the upper beam (3) is the same as the length of the lower beam (4), and wherein
- the first distance (D1) is the same as the second distance (D2), the beams and the pivot points thus making a parallelogram system, and
- said rotational movement of the user interface support (9) is zero degree (0°).

3. The armrest as claimed in claim 1, wherein one of the upper and lower beams (3, 4) is shorter than the other beam (3, 4).

4. The armrest as claimed in claim 1, wherein one of the first and second distances (D1,D2) is shorter than the other distance (D1, D2) .

5. The armrest as claimed in claim 1 or 2, wherein rotating axles of the pivot points (6, 7, 10, 11) are horizontally arranged.

6. The armrest as claimed in any of the preceding claims, wherein the lower pivot point (7) is arranged closer to the user interface support (9) as the upper pivot point (6).

7. The armrest as claimed in any of the preceding claims, comprising
- a locking means (14) that is arranged to lock the armrest (100) in at least one of the operating position and the upper position.

8. The armrest as claimed in claim 7, wherein said locking means (14) comprises
- a glide element (15) arranged to glide in the upper or the lower beam (3, 4),
- a locking stay (16), one end of which being connected rotatable to the glide element (15), and
- another end of the locking stay (16) being arranged in the lower or the upper beam (4, 3), respectively,
- the locking stay (16) thus connecting the upper beam (3) to the lower beam (4), and
- a locking mechanism (17) that, when being in its locking state, is arranged to prevent the glide element (15) to glide.

9. The armrest as claimed in any of the preceding claims, comprising a height adjustment means (18) that is arranged to change the height of the upper beam (3) with respect to the operator's operating environment.

10. The armrest as claimed in claim 9, wherein the height adjustment means (18) is arranged to tilt the upper beam (3), the tilting axle being in the upper pivot point (6).

11. The armrest as claimed in claim 10, wherein the height adjustment means (18) comprises
- a screw (19) lengthwise and rotatable arranged in the upper or the lower beam (3, 4),
- a height adjustment stay (20) comprising a first and a second end, the first end being connected rotatable to an adjustment element (21) and comprising a threaded aperture, the screw being fitted through said aperture such that rotation of the screw (19) moves the adjustment element (21) in the upper or the lower beam (3, 4), and
- the second end of the height adjustment stay (20) being attached rotatable to the other beam (3, 4), thus the rotational movement of the screw (19) being arranged to bring the beams (3, 4) closer to each other or, in opposite rotational direction, increasing distance of the beams (3, 4).

12. The armrest as claimed in any of the preceding claims, wherein the user interface (1) comprises a lever, such as a joystick (2).

13. The armrest as claimed in any of the preceding claims, wherein the user interface (1) is connected to the user interface support (9) by position adjustment means (12) allowing movement between the user interface (1) and the user interface support (9).

## Patentansprüche

1. Armlehne (100), umfassend eine Anwenderschnittstelle (1), wobei die Armlehne Folgendes umfasst
- einen oberen Träger (3),
- einen unteren Träger (4),
- wobei der obere und der untere Träger aufeinander eingerichtet sind und an deren ersten Ende (5) in Bezug auf eine Betriebsumgebung eines Betreibers durch obere beziehungsweise untere Schwenkpunkte (6, 7) drehbar sind, wobei die oberen und unteren Schwenkpunkte einen ersten Abstand (D1) aufweisen,
- wobei der obere und der untere Träger an deren zweiten Ende (8) drehbar mit einer Anwenderschnittstellenstütze (9) durch obere beziehungsweise untere Stützschwenkpunkte (10, 11) drehbar sind, wobei die oberen und unteren Stützschwenkpunkte einen zweiten Abstand (D2) aufweisen,
- wobei die Träger (3, 4) und die Schwenkpunkte (6, 7, 10, 11) derart eingerichtet sind, dass aufgrund von Drehung der Träger (3, 4) von einer Betriebsposition der Armlehne (100) zu einer oberen Position der Armlehne sich die Anwenderschnittstellenstütze (9) weniger als die Träger (3, 4) dreht, wobei
- die Betriebsposition der Armlehne (100) mindestens im Wesentlichen eine horizontale Position ist, und
- die obere Position mindestens im Wesentlichen eine vertikale Position ist, **dadurch gekennzeichnet, dass**
- mindestens eine obere Seite des oberen Trägers (3) eine Armlehenpolsterung (13) umfasst.

2. Armlehne nach Anspruch 1, wobei
- die Länge des oberen Trägers (3) dieselbe wie die Länge des unteren Trägers (4) ist, und wobei
- der erste Abstand (D1) derselbe wie der zweite Abstand (D2) ist, wodurch die Träger und die Schwenkpunkte ein Parallelogrammsystem bilden, und
- die Drehbewegung der Anwenderschnittstellenstütze (9) null Grad (0°) ist.

3. Armlehne nach Anspruch 1, wobei einer des oberen und des unteren Trägers (3, 4) kürzer als der andere Träger (3, 4) ist.

4. Armlehne nach Anspruch 1, wobei einer des ersten und des zweiten Abstands (D1, D2) kürzer als der andere Abstand (D1, D2) ist.

5. Armlehne nach Anspruch 1 oder 2, wobei Drehachsen der Schwenkpunkte (6, 7, 10, 11) horizontal eingerichtet sind.

6. Armlehne nach einem der vorstehenden Ansprüche, wobei der untere Schwenkpunkt (7) näher bei der Anwenderschnittstellenstütze (9) als der obere Schwenkpunkt (6) eingerichtet ist.

7. Armlehne nach einem der vorstehenden Ansprüche, umfassend
- ein Verriegelungsmittel (14), das eingerichtet ist, die Armlehne (100) in mindestens einer der Betriebsposition und der oberen Position zu verriegeln.

8. Armlehne nach Anspruch 7, wobei das Verriegelungsmittel (14) umfasst
- ein Gleitelement (15), das eingerichtet ist, in dem oberen oder dem unteren Träger (3, 4) zu gleiten,
- eine Verriegelungshalterung (16), von der ein Ende drehbar mit dem Gleitelement (15) verbunden ist, und
- wobei ein anderes Ende der Verriegelungshalterung (16) in dem unteren beziehungsweise dem oberen Träger (4, 3) eingerichtet ist,
- wodurch die Verriegelungshalterung (16) den oberen Träger (3) mit dem unteren Träger (4) verbindet, und
- einen Verriegelungsmechanismus (17), der, wenn er in seinem Verriegelungszustand ist, eingerichtet ist, das Gleitelement (15) daran zu hindern, zu gleiten.

9. Armlehne nach einem der vorstehenden Ansprüche, umfassend ein Höhenanpassungsmittel (18), das eingerichtet ist, die Höhe des oberen Trägers (3) in Bezug auf die Betriebsumgebung des Betreibers zu verändern.

10. Armlehne nach Anspruch 9, wobei das Höhenanpassungsmittel (18) eingerichtet ist, den oberen Träger (3) zu neigen, wobei die Neigungsachse in dem oberen Schwenkpunkt (6) liegt.

11. Armlehne nach Anspruch 10, wobei das Höhenanpassungsmittel (18) umfasst
- eine Schraube (19), die längs und drehbar in dem oberen oder dem unteren Träger (3, 4) eingerichtet ist,
- eine Höhenanpassungshalterung (20), die ein erstes und ein zweites Ende umfasst, wobei das erste Ende drehbar mit einem Anpassungselement (21) verbunden ist und eine Gewindeöffnung umfasst, wobei die Schraube durch die Öffnung derart eingesetzt wird, dass Drehung der Schraube (19) das Anpassungselement (21) in dem oberen oder dem unteren Träger (3, 4) bewegt, und
- das zweite Ende der Höhenanpassungshalterung (20) drehbar an dem anderen Träger (3, 4) befestigt ist, wodurch die Drehbewegung der Schraube (19) eingerichtet ist, die Träger (3, 4) näher zueinander zu bringen, oder in entgegengesetzter Drehrichtung einen Abstand der Träger (3, 4) zu erhöhen.

12. Armlehne nach einem der vorstehenden Ansprüche, wobei die Anwenderschnittstelle (1) einen Hebel umfasst, wie einen Steuerhebel (2).

13. Armlehne nach einem der vorstehenden Ansprüche, wobei die Anwenderschnittstelle (1) mit der Anwenderschnittstellenstütze (9) durch Positionsanpassungsmittel (12) verbunden ist, was Bewegung zwischen der Anwenderschnittstelle (1) und der Anwenderschnittstellenstütze (9) erlaubt.

## Revendications

1. Accoudoir (100), comprenant une interface utilisateur (1), l'accoudoir comprenant
- une poutre supérieure (3),
- une poutre inférieure (4),
- lesdites poutres supérieure et inférieure étant agencées l'une sur l'autre et attachées à leur première extrémité (5) de manière rotative par rapport à un environnement opérationnel d'opérateur par des points de pivotement supérieur et inférieur (6, 7) respectivement, les points de pivotement supérieur et inférieur présentant une première distance (D1),
- les poutres supérieure et inférieure étant attachées à leur seconde extrémité (8) de manière rotative à un support d'interface utilisateur (9) par des points de pivotement de support supérieur et inférieur (10, 11) respectivement, les points de pivotement de support supérieur et inférieur présentant une seconde distance (D2),
- les poutres (3, 4) et les points de pivotement (6, 7, 10, 11) étant agencés de sorte qu'en raison de la rotation des poutres (3, 4) d'une position opérationnelle de l'accoudoir (100) à une position supérieure dudit accoudoir, le support d'interface utilisateur (9) tourne moins que les poutres (3, 4), dans lequel
- la position opérationnelle de l'accoudoir (100) est au moins essentiellement une position horizontale, et
- la position supérieure est au moins essentiellement une position verticale, **caractérisé en ce que**
- au moins un côté supérieur de la poutre supérieure (3) comprend un rembourrage d'accoudoir (13).

2. Accoudoir selon la revendication 1, dans lequel
- la longueur de la poutre supérieure (3) est la même que la longueur de la poutre inférieure (4), et dans lequel
- la première distance (D1) est la même que la seconde distance (D2), les poutres et les points de pivotement formant ainsi un système de parallélogramme, et
- ledit mouvement rotatif du support d'interface utilisateur (9) est de zéro degré (0°).

3. Accoudoir selon la revendication 1, dans lequel une des poutres supérieure et inférieure (3, 4) est plus courte que l'autre poutre (3, 4).

4. Accoudoir selon la revendication 1, dans lequel une des première et seconde distances (D1, D2) est plus courte que l'autre distance (D1, D2).

5. Accoudoir selon la revendication 1 ou 2, dans lequel des axes rotatifs des points de pivotement (6, 7, 10, 11) sont agencés horizontalement.

6. Accoudoir selon l'une quelconque des revendications précédentes, dans lequel le point de pivotement inférieur (7) est agencé plus près du support d'interface utilisateur (9) que le point de pivotement supérieur (6).

7. Accoudoir selon l'une quelconque des revendications précédentes, comprenant
- un moyen de verrouillage (14) qui est agencé pour verrouiller l'accoudoir (100) dans au moins une de la position opérationnelle et la position supérieure.

8. Accoudoir selon la revendication 7, dans lequel ledit moyen de verrouillage (14) comprend
- un élément de coulissement (15) agencé pour coulisser dans la poutre supérieure ou la poutre inférieure (3, 4),
- une contrefiche de verrouillage (16), dont une extrémité est raccordée de manière rotative à l'élément de coulissement (15), et
- une autre extrémité de la contrefiche de verrouillage (16) étant agencée dans la poutre inférieure ou la poutre supérieure (4, 3) respectivement,
- la contrefiche de verrouillage (16) raccordant ainsi la poutre supérieure (3) à la poutre inférieure (4), et
- un mécanisme de verrouillage (17) qui, lorsqu'il est dans son état de verrouillage, est agencé pour empêcher l'élément de coulissement (15) de coulisser.

9. Accoudoir selon l'une quelconque des revendications précédentes, comprenant un moyen d'ajustement de hauteur (18) qui est agencé pour changer la hauteur de la poutre supérieure (3) par rapport à l'environnement opérationnel d'opérateur.

10. Accoudoir selon la revendication 9, dans lequel le moyen d'ajustement de hauteur (18) est agencé pour incliner la poutre supérieure (3), l'axe d'inclinaison étant dans le point de pivotement supérieur (6).

11. Accoudoir selon la revendication 10, dans lequel le moyen d'ajustement de hauteur (18) comprend
- une vis (19) agencée sur la longueur et rotative dans la poutre supérieure ou la poutre inférieure (3, 4),
- une contrefiche d'ajustement de hauteur (20) comprenant une première et seconde extrémité, la première extrémité étant raccordée de manière rotative à un élément d'ajustement (21) et comprenant une ouverture filetée, la vis étant insérée à travers ladite ouverture de sorte que la rotation de la vis (19) déplace l'élément d'ajustement (21) dans la poutre supérieure ou la poutre inférieure (3, 4), et
- la seconde extrémité de la contrefiche d'ajustement de hauteur (20) étant attachée de manière rotative à l'autre poutre (3, 4), ainsi le mouvement rotatif de la vis (19) étant agencé pour amener les poutres (3, 4) plus près l'une de l'autre ou, en direction de rotation opposée, à distance croissante des poutres (3, 4).

12. Accoudoir selon l'une quelconque des revendications précédentes, dans lequel l'interface utilisateur (1) comprend un levier, tel qu'un joystick (2).

13. Accoudoir selon l'une quelconque des revendications précédentes, dans lequel l'interface utilisateur (1) est raccordée au support d'interface utilisateur (9) par un moyen d'ajustement de position (12) permettant un mouvement entre l'interface utilisateur (1) et le support d'interface utilisateur (9).
